# EUROPÄISCHE PATENTSCHRIFT

(11) **EP 2 980 551 B1**
(45) Veröffentlichungstag und Bekanntmachung des Hinweises auf die Patenterteilung: **23.05.2018**
(21) Anmeldenummer: 15179174.6
(22) Anmeldetag: 30.07.2015
(51) Int. Cl.: G01L 5/28, G01L 3/10

(54) **KRAFTFAHRZEUG-BREMSPRÜFSTAND**
MOTOR VEHICLE BRAKE TEST BENCH
BANC D'ESSAI DE FREINAGE DE VEHICULE AUTOMOBILE

(30) Priorität: 30.07.2014 DE 102014214971
(43) Veröffentlichungstag der Anmeldung: 03.02.2016
(73) Patentinhaber: MAHA Maschinenbau Haldenwang GmbH & Co. KG, 87490 Haldenwang (DE)
(72) Erfinder: Hernandez Gonzalez, Andres, 87463 Dietmannsried (DE); Miller, Bernd, 87466 Oy-Mittelberg (DE); Beaujean, Frank, 87542 Altusried (DE)
(74) Vertreter: MERH-IP Matias Erny Reichl Hoffmann Patentanwälte PartG mbB

(56) Entgegenhaltungen:
- EP-A1- 0 545 061
- EP-A1- 1 482 294
- EP-A1- 2 431 316
- EP-A2- 2 543 528
- AT-U2- 9 782
- DE-A1- 10 200 409
- JP-A- 2005 351 649
- US-A- 4 979 399
- US-A1- 2002 162 403

## Beschreibung

Die vorliegende Erfindung betrifft einen Kraftfahrzeug-Bremsprüfstand, der Bremskräfte genauer erfassen kann, wobei der Prüfstand selbst kompakter und werriger komplex aufgebaut ist. Insbesondere weist der erfindungsgemäße Prüfstand die Vorteile auf, dass auf einen Drehmomentenmessarm, der auch als Biege-Messbalken bezeichnet wird, verzichtet werden kann und dass der Antrieb des Prüfstandes nicht mehr pendelnd gelagert werden muss.

Im Stand der Technik sind Bremsprüfstände bekannt, mit denen Drehmomente bzw. Bremskräfte von Kraftfahrzeugen ermittelt werden, deren Räder dazu auf Antriebsrollen abgestellt sind. Bremskräfte, die auf die Antriebsrollen wirken, erzeugen ein Gegen- bzw. ein Reaktionsmoment, das mittels eines sogenannten Biege-Messbalkens ermittelt werden kann. Das bis dato bekannte, oben erläuterte Messprinzip hat u.a. den Nachteil des Biege-Messbalkens, der einem kompakteren Aufbau genauso hinderlich im Wege steht wie auch einem möglichst verschleißarmen und bauteilreduziertem Aufbau des Prüfstandes. Ferner muss der Antrieb pendelnd bzw. drehbar gelagert sein, damit die Messung der Bremskraft über den Biege-Messbalken möglich ist. Die pendelnde Lagerung des Antriebes erhöht die Komplexität und Verschleißanfälligkeit der bekannten Bremsprüfstände zusätzlich.

Die EP 0 545 061 A1 betrifft ein Verfahren zur automatischen Nullpunkt-Fehlerkorrektur einer Bremskraftanzeige eines Bremsprüfstandes für Kraftfahrzeuge. Es ist vorgesehen, dass bei eingeschaltetem und unbelastetem Bremsprüfstand der Korrekturwert bei stehendem Antrieb und der Gesamtkorrekturwert bei laufendem Antrieb ermittelt werden und die Differenz aus Gesamtkorrekturwert und statischem Korrekturwert als Konstante und der statische Korrekturwert als Variable weiterverarbeitet werden, so dass eine Nullpunkt-Fehlerkorrektur der Bremskraftanzeige automatisch ermöglicht wird.

Die EP 2 431 316 A1 betrifft eine Vorrichtung und ein Verfahren zum Testen des Bremsverhaltens eines Fahrstuhls.

Die EP 1 482 294 A1 betrifft eine Vorrichtung und ein Verfahren für die Inspektion eines Motorrads. Über Drehmomenteinrichtungen wird ermittelt, ob die Bremskraft akzeptabel ist, wenn die Bremse des Motorrads vollständig angezogen ist und Rollen der Vorrichtung durch einen Motor angetrieben werden.

Die JP 2005 351649 A betrifft einen Fahrzeugprüfstand zum Testen von Fahrzeugen. Über eine Steuervorrichtung werden Fahrzustände als Last auf das Testfahrzeug aufgebracht, wobei das Bremsmoment ermittelt werden kann.

Die DE 102 00 409 A1 beschreibt einen Wandlerkörper zur Umwandlung einer an Drehmoment- oder Kraftaufnahmemitteln des Wandlerkörpers anliegenden Scherkraft oder eines Drehmomentes in ein in Abhängigkeit von der Scherkraft oder dem Drehmoment beeinflusstes magnetisches Feld, wobei ferner der Wandlerkörper mindestens ein verformbares Material umfasst, welches sich nach Maßgabe der anliegenden Scherkraft oder des anliegenden Drehmomentes nach Art eines elastischen Materials verformt.

AT 9 782 U2 beschreibt einen Drehmoment-Messflansch mit einem Anschlussflansch an einem ersten axialen Ende des Drehmoment-Messflansches und einer sich axial daran anschließenden Anschlussnabe am gegenüberliegenden zweiten axialen Ende des Drehmoment-Messflansches und mit einem dazwischen angeordneten, sich axial erstreckenden Drehmomenten-Messabschnitt, an dem eine Drehmomenten-Messeinrichtung angeordnet ist.

US 2002/162403 A1 beschreibt einen magnetischen Drehmomentsensor, der eine drehbare Welle aufweist, an die eine Drehmomentkraft angelegt wird, eine Hülse aus leitfähiger Folie, die an der Oberfläche der Welle über den magnetisch aktiven Bereichen befestigt ist, eine Vielzahl von sättigbaren magnetischen Drähten oder Streifen, die an der drehbaren Welle und parallel zu einer Drehachse angebracht sind, und eine Sensorschaltung.

Die US 4 979 399 A beschreibt ein berührungsloses Verfahren zum Erfassen eines Drehmoments auf der Grundlage des Prinzips der Magnetostriktion.

Die EP 2 543 528 A2 beschreibt einen geteilten Wankstabilisator eines Kraftfahrzeuges, zwischen dessen beiden Stabilisatorteilen ein Aktuator für eine Torsion der Stabilisatorteile angeordnet ist, wobei eines der Stabilisatorteile mit einem die Antriebseinrichtung kann ortsfest an dem Prüfstandrahmen angeordnet sein.

Zumindest eine erste Welle kann der Prüfstand aufweisen, die mit der Antriebsrolle drehfest verbunden sein kann und über die ein Drehmoment zwischen der Antriebsrolle und der Antriebseinrichtung übertragbar sein kann. Ferner kann eine Erfassungseinrichtung vorgesehen sein, die dazu geeignet sein kann, ein übertragenes Drehmoment zu erfassen.

Die als erste Welle bezeichnete Welle kann in einem bevorzugten Beispiel eine Antriebsrollenwelle sein.

Die als "Antriebs(rollen)welle" oder im Folgenden auch kurz "Antriebswelle" bezeichnete Welle ist entweder einstückig mit der Antriebsrolle ausgeführt oder ein an der Antriebsrolle fest montiertes Bauteil.

Die Antriebsrollenwelle kann als Hohlwelle oder Vollwelle ausgeführt sein.

Ferner kann die erste Welle in einem weiteren bevorzugten Beispiel eine Abtriebswelle der Antriebseinrichtung sein. Die "Abtriebswelle" ist bevorzugt die Welle, die das Drehmoment oder die Drehung der Antriebseinrichtung nach außen leitet. Die Abtriebswelle der Antriebseinrichtung kann beispielsweise die Ausgangswelle eines Getriebes der Antriebseinrichtung oder die Rotorwelle eines Motors der Antriebseinrichtung sein.

Ferner kann die erste Welle auch ein separates Bauteil zu der Abtriebswelle und der Antriebsrollenwelle sein, die die Abtriebswelle und die Antriebsrollenwelle miteinander verbindet.

Die Angabe, dass die Antriebseinrichtung ortsfest an dem Prüfstandrahmen befestigt ist, soll insbesondere bedeuten, dass die Antriebseinrichtung fest an dem Prüfstandrahmen montiert ist, z.B. mittels einer Schraubverbindung. Mit anderen Worten soll "ortsfest" (oder positionsfest) bedeuten, dass die Antriebseinrichtung an dem Prüfstandrahmen (oder zumindest an einem Teilabschnitt des Prüfstandrahmens) befestigt ist und keine Relativbewegung zu dem Prüfstandrahmen ausführt. Dies ist insbesondere ein Gegensatz zu dem herkömmlich bekannten Prinzip der pendelnden Torsion übertragenden Anschlussteil zum Anschließen des Aktuators versehen ist, wobei das Anschlussteil magnetisch kodiert ist.

Es ist eine Aufgabe der vorliegenden Erfindung einen Kraftfahrzeug-Bremsprüfstand anzubieten, der Bremskräfte eines Kraftfahrzeuges genauer erfassen kann und der kompakter und weniger komplex aufgebaut ist.

Die Aufgabe wird von der Erfindung gemäß dem unabhängigen Patentanspruch gelöst. Weitere bevorzugte Weiterentwicklungen der Erfindung sind in den abhängigen Patentansprüchen beschrieben.

Der erfindungsgemäße Kraftfahrzeugbremsprüfstand (nachfolgend auch kurz "Prüfstand" genannt) kann zumindest eine Antriebsrolle aufweisen, die drehbar in einem Prüfstandrahmen gelagert sein kann. Die Antriebsrolle kann dazu geeignet sein, ein Rad eines Kraftfahrzeuges anzutreiben. Ferner kann der Prüfstand zumindest eine Antriebseinrichtung umfassen, die dazu geeignet sein kann, die Antriebsrolle anzutreiben. Die Lagerung der Antriebseinrichtung, die für die Verwendung des Biege-Messbalkens notwendig war.

Das übertragene Moment oder Drehmoment kann von der Antriebseinrichtung auf die Antriebsrolle zum Antreiben der Rolle übertragen werden. Ferner kann das übertragene Drehmoment auch von der Antriebsrolle in Richtung der Antriebseinrichtung übertragen werden. Die Übertragung eines Momentes von der Antriebsrolle in Richtung der Antriebseinrichtung erfolgt bei einem Bremsvorgang des Kraftfahrzeuges, das auf dem Prüfstand bzw. dessen Antriebsrolle(n) aufsteht. Genauer wird durch das Abbremsen des Kraftfahrzeuges das übertragene Drehmoment erzeugt, das von der Antriebsrolle in Richtung der Antriebseinrichtung übertragen wird. Insbesondere wird dieses übertragene Drehmoment erfindungsgemäß erfasst und ausgewertet, um die Bremsprüfung des Kraftfahrzeuges durchzuführen.

Die Erfassungseinrichtung erfasst oder misst bevorzugt das oben erläuterte übertragene Drehmoment, das bei dem Abbremsen des Kraftfahrzeuges entsteht, das zu Prüfungszwecken auf dem Prüfstand aufgestellt ist.

Die Erfindung ermöglicht insbesondere, dass weniger Bauteile eingesetzt werden können, um ein Drehmoment, das z.B. beim Abbremsen eines Kraftfahrzeuges auf die Antriebsrollen wirkt, zu erfassen. Es ist insbesondere nicht mehr notwendig, einen Biege-Messbalken am Antrieb zu befestigen, der bei herkömmlichen gattungsgleichen Prüfständen eingesetzt worden ist, und die Antriebseinrichtung muss nicht mehr pendelnd gelagert werden. Dies erhöht folglich die Kompaktheit und die Messgenauigkeit des erfindungsgemäßen Prüfstandes und reduziert dessen Komplexität. Der mögliche erfindungsgemäße Verzicht auf die pendelnde Lagerung erlaubt insbesondere eine sehr kompakte und weniger verschleißanfällig Ausführung des erfindungsgemäßen Prüfstandes.

Ferner kann die Erfassungseinrichtung dazu geeignet sein, eine mechanische Spannungsänderung zu erfassen. Die Erfassungseinrichtung kann zusätzlich oder alternativ auch eine mechanische Verformung erfassen.

Bevorzugt kann die Erfassungseinrichtung eine mechanische Spannungsänderung und/oder mechanische Verformung der ersten Welle erfassen.

Ferner ist es auch möglich, dass die Erfassungseinrichtung eine mechanische Spannungsänderung und/oder mechanische Verformung des Prüftstandrahmens erfassen kann.

Ferner ist es auch möglich, dass die Erfassungseinrichtung eine mechanische Spannungsänderung und/oder mechanische Verformung eines Verbindungselementes erfassen kann, das eine Abtriebswelle der Antriebseinrichtung und die Antriebsrollenwelle miteinander verbindet.

Besonders bevorzugt kann die Erfassungseinrichtung auch eine mechanische Spannungsänderung und/oder mechanische Verformung einer Kombination der oben genannten Komponenten, d.h. der ersten Welle, des Prüfstandrahmens und des Verbindungselementes, erfassen. Beispielsweise kann die Erfassungseinrichtung Erfassungselemente bzw. Sensoren an mehreren der oben genannten Komponenten aufweisen, so dass beispielsweise die Verformung/Spannungsänderung der ersten Welle und des Prüfstandrahmens messbar ist, oder des Prüfstandrahmens und des Verbindungselementes.

Unter einer "mechanischen Verformung" soll insbesondere jegliche Änderung der äußeren Gestalt, bevorzugt eine elastische, verstanden werden. Diese Verformung ist bevorzugt sehr klein.

Die Erfassungseinrichtung kann die mechanische Spannungsänderung und/oder mechanische Verformung derart erfassen, dass basierend auf der mechanische Spannungsänderung und/oder mechanischen Verformung das übertragene Drehmoment bestimmbar ist. Mit anderen Worten besteht ein vorbestimmter Zusammenhang zwischen dem zu erfassenden übertragenen Drehmoment und der mechanischen Spannungsänderung/mechanischen Verformung.

Die Erfassungseinrichtung kann bevorzugt ein sehr kompaktes Bauteil sein, das keinen Biege-Messbalken aufweist, um das übertragene Drehmoment zu ermitteln.

Ferner kann die Erfassungseinrichtung zumindest ein Sensormittel aufweisen, das dazu geeignet sein kann, Änderungen der magnetischen Eigenschaften eines Messabschnittes zu erfassen. Die erste Welle kann einen Längsabschnitt aufweisen, der ein magnetisch kodierter Messabschnitt sein kann. Der Messabschnitt kann derart kodiert sein, dass ein vorbestimmter physikalischer Zusammenhang zwischen den magnetischen Eigenschaften des Messabschnittes und einer mechanischen Spannungsänderung des Messabschnittes gegeben sein kann.

Ferner kann das Sensormittel ein Magnetfeld-Sensor sein, der berührungslos zu dem Messabschnitt angeordnet ist.

Ferner kann der Messabschnitt ein axialer Endabschnitt der ersten Welle sein.

Die Änderung der magnetischen Eigenschaften betrifft insbesondere eine Änderung der Magnetisierung des Messbereiches. Wird der Messbereich einer mechanischen Spannungsänderung und/der Verformung unterworfen, so ändert sich die Magnetisierung; und zwar nach einer vorgegebenen physikalischen Gesetzmäßigkeit, die es erlaubt, basierend auf der Änderung der Magnetisierung die Spannungsänderung und/oder Verformung zu ermitteln. Die Änderung der Magnetisierung wird bevorzugt dadurch erfasst, dass das Sensormittel ein Magnetfeld-Sensor ist, der eine Änderung des Magnetfeldes des Messbereiches erfasst. Die erfasste Änderung des Magnetfeldes erlaubt dann die Ermittlung der Spannungsänderung und/der Verformung.

Besonders bevorzugt wird die erste Welle bzw. ein Endabschnitt der ersten Welle beispielsweise mittels eines Beaufschlagens von Stromimpulsen magnetisch kodiert. Beispielsweise können während der Fertigung der ersten Welle oder bei dem Zusammenbau des Prüfstandes Stromzu- und ableitungen an der ersten Welle angeschlossen werden, über die dann elektrische Stromstöße mit hoher Stromstärke (zumindest mehrere Ampere bis mehrere zu kiloAmpere) durch die erste Welle bzw. durch einen Abschnitt der ersten Welle geleitet werden.

Die Strombeaufschlagung hat zur Folge, dass ein Messabschnitt ausgebildet wird, der magnetische Eigenschaften aufweist, die zur Messung von mechanischen Spannungszuständen und/oder Verformungen heranziehbar sind. Besonders bevorzugt wird der Messabschnitt derart kodiert, dass das Magnetfeld sehr klein bzw. nicht messbar ist, wenn keine äußere mechanische Spannung und/oder Verformung auf diesen einwirkt; und wenn eine äußere mechanische Spannung und/oder Verformung auf diesen einwirkt, so wird ein von außen messbares Magnetfeld um den Messabschnitt ausgebildet. Beispielsweise ist dann die Änderung der Stärke des Magnetfeldes eindeutig, beispielsweise über einen linearen Zusammenhang, der mechanischen Spannungsänderung bzw. Verformung des Messabschnittes zuordenbar.

Die Erfassung einer magnetischen Änderung bei einer Änderung der mechanischen Spannung bzw. Verformung des Messabschnittes erlaubt es, dass Drehmomente sehr genau und trotzdem mit weniger komplexen Mitteln erfassbar sind. Insbesondere ist es vorteilhaft, dass die erste Welle keine weiteren Sensoren oder dgl. aufweisen muss, da die erste Welle bzw. ein Teilabschnitt an sich bereits als eine Art Sensorbauteil fungieren kann.

Die Anordnung eines Magnetfeld-Sensors kann zudem ohne physischen Kontakt zu der ersten Welle erfolgen, d.h. berührungslos, so dass Verschleiß reduziert wird. Der Magnetfeld-Sensor umfasst bevorzugt eine Spule oder einen Hall-Sensor.

Die Anordnung des Messabschnittes an einem axialen Endabschnitt der ersten Welle erlaubt zudem, dass eine optimale räumliche Anordnung im Hinblick auf einen möglichst kompakten Prüfstandaufbau erzielt werden kann.

Ferner können eine Abtriebswelle der Antriebseinrichtung und die Antriebsrollenwelle der Antriebsrolle mittels eines Verbindungselementes drehfest miteinander verbunden sein. Die Erfassungseinrichtung kann an dem Verbindungselement angeordnet sein. Die Erfassungseinrichtung kann ein Erfassungselement aufweisen, das einen optischen Sensor, einen piezoelektrischen Sensor und/oder einen Sensoren für akustische Oberflächenwellen, umfasst, mit dem eine Verformung der ersten Welle zur Bestimmung des Drehmomentes erfasst werden kann. Das Erfassungselement kann auch ein oder mehrere Dehnmessstreifen umfassen.

Zusätzlich oder alternativ zu einer Erfassung der Verformung oder Spannungsänderung der ersten Welle kann die Erfassungseinrichtung auch eine Verformung oder Spannungsänderung des Verbindungselementes selbst oder eines Abschnittes dessen erfassen. Dazu kann die Erfassungseinrichtung oder zumindest ein Erfassungselement an dem Verbindungselement angeordnet sein. Beispielsweise kann das Verbindungselement ein Flansch zur Verbindung der Abtriebs- und der Antriebswelle sein, an dem die oben genannten Erfassungselemente bzw. Sensoren montiert sein können. Wirkt das übertragene Drehmoment auf das Verbindungselement zwischen den beiden Wellen, Antriebs- und Abtriebswelle, so kommt es zu einer Spannungsänderung und/oder Verformung des Verbindungselementes bzw. eines Abschnittes dessen, die von den Erfassungselementen gemessen wird. Die Messwerte ermöglichen dann die Berechnung des übertragenen Drehmomentes. Die Messwerte können von den Erfassungselementen beispielsweise telemetrisch an eine Auswerte- oder Recheneinheit übertragen werden.

Ferner kann die Erfassungseinrichtung einen Messflansch umfassen, der fest mit dem Prüfstandrahmen und einem Gehäuse der Antriebseinrichtung verbunden ist.

Der Messflansch erfasst ein Reaktionsmoment des übertragenen Drehmomentes in dem Prüfstandrahmen, so dass anhand des Reaktionsmomentes das übertragene Drehmoment errechnet werden kann. Mit anderen Worten erfasst der Messflansch das Reaktionsmoment das im Prüfstandrahmen dadurch erzeugt wird, das das von der Antriebsrolle übertragene Drehmoment in den Prüfstandrahmen fließt

Bevorzugt weist der Messflansch eine Durchgangsbohrung, bevorzugt zentrisch, auf, so dass die Abtriebswelle der Antriebsvorrichtung durch die Durchgangsbohrung geführt werden kann. Dies ermöglicht, dass die einzelnen Bauteile des Prüfstandes sehr dicht gepackt angeordnet werden können und somit der Prüfstand sehr kompakt ist.

Ferner kann die Erfassungseinrichtung eine Recheneinheit aufweisen oder mit einer Recheneinheit verbunden sein, die basierend auf der erfassten mechanischen Spanungsänderung das übertragene Drehmoment berechnen kann.

Besonders bevorzugt ist die Recheneinheit mittels Funkverbindung mit Sensoren der Erfassungseinrichtung verbunden, so dass die Sensoren per Funk die erfassten Werte an die Recheneinheit, die beispielsweise zentral an einem Bedienfeld des Prüfstandes angeordnet sein kann, gesendet werden können und dort ausgewertet werden können. Im einfachsten Fall wird der physikalische Zusammenhang zwischen einem Sensorsignal, z.B. dem erfassten Magnetfeld bzw. dessen Stärke, und der Spannungsänderung und/oder Verformung mittels Messungen einmalig bestimmt und kalibriert.

Die erfassten Werte können ferner auch über eine kabelgebundene Verbindung übertragen werden, wobei die Werte sowohl in digitaler als auch in analoger Form übertragen und/oder verarbeitet werden können.

Die Erfassungseinrichtung kann somit entweder die Verformung/Verspannung der ersten Welle, die des Prüfstandrahmens und/oder die des Verbindungselementes erfassen und macht somit eine höchstflexible und kompakte Anordnung der einzelnen Bauteile des Prüfstandes je nach Anwendungsszenario möglich.

Ferner kann die Antriebseinrichtung zumindest einen Motor und zumindest ein Getriebe aufweisen. Das Getriebe kann dazu geeignet sein, die mit dem Getriebe verbundene Welle mit einer regelbaren Drehzahl anzutreiben.

Bei besonders kompakten erfindungsgemäßen Vorrichtungen kann auf das Getriebe auch verzichtet werden, so dass die Antriebseinrichtung einen Motor, aber kein Getriebe aufweist. Bei Antriebsvorrichtungen ohne Getriebe können bevorzugt Motoren mit einem hohen Drehmoment, insbesondere bei hohen Drehzahlen, eingesetzt werden.

Ferner kann die Erfassungseinrichtung zumindest teilweise innerhalb eines Gehäuses der Antriebseinrichtung angeordnet sein. Insbesondere die zuvor erläuterte kompakte Ausführung der Erfassungseinrichtung, die keinen Biege-Messbalken erfordert, ermöglicht eine Unterbringung innerhalb des Antriebs- bzw. Getriebegehäuses, so dass auch hinsichtlich der Anordnung der einzelnen Bauteile des Prüfstandes weitere Freiheitsgrade für ein möglichst kompaktes Design des Prüfstandes entstehen.

Ferner kann eine Rotorwelle des Motors aus einem Gehäuse der Antriebseinrichtung herausragen. Der Abschnitt der Rotorwelle, der aus dem Gehäuse ragen kann, kann eine Schlüsselfläche und/oder eine Nut für eine Feder-Nut-Verbindung aufweisen.

Bevorzugt ragt ein Abschnitt der Rotorwelle auf einer Seite des Gehäuses heraus, die entgegengesetzt zu dem Ausgang der Abtriebswelle der Antriebseinrichtung ist. Der herausragende Abschnitt bietet bevorzugt eine Möglichkeit, eine Welle-Nabe-Verbindung zwischen dem herausragenden Abschnitt und einer externen Nabe herzustellen, und/oder der herausragende Abschnitt weist zumindest eine Möglichkeit auf, die es erlaubt einen Drehmomentschlüssel oder dgl. an dem Abschnitt anzusetzen. Dazu eignen sich bevorzugt die genannte Schlüsselfläche oder die genannte Nut. Hintergrund dazu ist, dass an dem herausragenden Abschnitt somit eine Vorrichtung angeschlossen werden kann, die extern ein Drehmoment an/auf die Rotorwelle anlegt/überträgt, oder die die Rotorwelle hinsichtlich ihrer Rotationsposition festhält.

Ferner kann die erste Welle eine Schlüsselfläche und/oder eine Nut für eine Feder-Nut-Verbindung aufweisen. Weitere Möglichkeiten zur Ausbildung einer Welle-Nabe-Verbindung können, wie oben beschrieben wurde, auch bei der ersten Welle vorgesehen sein. Auch hier ist der technische Hintergrund, dass somit eine Vorrichtung angeschlossen werden kann, die extern ein Drehmoment an/auf die erste Welle anlegt/überträgt, oder die die erste Welle hinsichtlich ihrer Rotationsposition festhält.

Vorteilhaft ist die beschriebene Ausprägung der Rotorwelle und der ersten Welle dahingehend, dass bei einer Kalibrierung/Justierung und/oder Inbetriebnahme des Prüfstandes beispielsweise an den herausragenden Teil der Rotorwelle ein Motor oder dgl. angeschlossen werden kann, der ein vordefiniertes Referenzdrehmoment an die Rotorwelle über die oben beschriebene Welle-Nabe-Verbindung zwischen externen Motor und herausragenden Abschnitt übertragen kann. Wird gleichzeitig mittels der Welle-Nabe-Verbindungsmöglichkeit an der ersten Welle die erste Welle mittels einer weiteren externen Vorrichtung, im einfachsten Beispiel ein Maulschlüssel, festgehalten, so wird ein Drehmoment erzeugt, dass die Erfassungseinrichtung erfassen kann. Der Abgleich zwischen erfassten Drehmoment und Referenzdrehmoment ermöglicht danach eine Kalibrierung des Prüfstandes.

Umgekehrt kann das Referenzdrehmoment auch an der ersten Welle eingeleitet werden und der herausragende Abschnitt der Rotorwelle festgehalten werden.

Ferner kann das Getriebe ein Winkelgetriebe sein, beispielsweise ein Kegelrad-, Flach-, oder Schneckengetriebe. Bei einem Winkelgetriebe kann die Antriebsrollenwelle bevorzugt L-förmig zu der Abtriebswelle angeordnet sein. Bei einem zweistufigen Stirnrad werden die Antriebs- und die Abtriebswelle bevorzugt koaxial angeordnet.

Wenn die erste Welle beispielsweise die Abtriebswelle ist, so kann ein Verbindungsabschnitt der Abtriebswelle derart geformt sein, dass eine Welle-Nabe-Verbindung mit der Antriebsrollenwelle hergestellt werden kann. Dazu kann die Antriebsrollenwelle beispielsweise eine Hohlwelle sein, in deren Endabschnitt die Abtriebswelle eingesteckt wird, so dass eine drehfeste Verbindung geschaffen werden kann.

Die Erfindung umfasst ferner auch ein Verfahren zum Kalibrieren oder Justieren des Prüfstandes, bei dem, wie oben beschrieben, ein vordefiniertes (Referenz-)Drehmoment an die erste Welle angelegt werden kann während der herausstehende Abschnitt der Rotorwelle gegen Verdrehen gesichert werden kann. Alternativ kann das vordefinierte Drehmoment an den herausstehenden Abschnitt der Rotorwelle angelegt werden während die erste Welle gegen ein Verdrehen gesichert werden kann. Das angelegte vordefinierte Drehmoment kann mittels der Erfassungseinrichtung erfasst werden, so dass dann beispielweise im Abgleich zwischen Messwert und Referenzmoment eine Justierung oder Kalibrierung ermöglicht wird.

Zusammenfassend ist der erfindungsgemäße Prüfstand dazu geeignet, genauer und mit einem weniger komplexen Aufbau die Bremskraft eines Kraftfahrzeuges zu erfassen. Die Bremskraft wird aus dem Drehmoment ermittelt, dass von der Antriebsrolle übertragen wird. Das Drehmoment wird erfindungsgemäß nicht mehr über einen Biege-Messbalken erfasst, sondern, wie oben beschrieben, mittels einer kompakteren und hinsichtlich ihres Aufbaus weniger komplexen Erfassungseinrichtung. Der gesamte Aufbau des Prüfstandes wird dadurch kompakter und zudem weniger wartungsaufwendig.

Die Erfindung wird im Folgenden exemplarisch mit Bezug auf die beigefügten, schematischen Zeichnungen beschrieben. Es zeigen
Fig. 1 eine perspektivische Ansicht eines Ausschnittes eines vorbekannten Bremsprüfstandes mit einem Biege-Messbalken zur Messung von Bremskräften,
Fig. 2 eine perspektivische Ansicht eines Ausschnittes eines erfindungsgemäßen Bremsprüfstandes, der Bremskräfte ohne einen Biege-Messbalken erfasst,
Fig. 3 eine perspektivische Ansicht einer erfindungsgemäßen Antriebseinrichtung,
Fig. 4 eine perspektivische Ansicht einer erfindungsgemäßen Abtriebswelle mit einer ersten Erfassungseinrichtung,
Fig. 5 eine perspektivische Ansicht einer erfindungsgemäßen Antriebsvorrichtung mit einer zweiten Erfassungseinrichtung,
Fig. 6 eine perspektivische Ansicht eines Ausschnittes eines erfindungsgemäßen Bremsprüfstandes mit einer zweiten Erfassungseinrichtung und
Fig. 7 eine perspektivische Ansicht eines Ausschnittes eines erfindungsgemäßen Bremsprüfstandes mit einer dritten Erfassungseinrichtung.

Im Folgenden werden verschiedene Beispiele der vorliegenden Erfindung detailliert unter Bezugnahme auf die Figuren beschrieben. Gleiche bzw. ähnliche Elemente in den Figuren werden hierbei mit gleichen Bezugszeichen bezeichnet. Die vorliegende Erfindung ist jedoch nicht auf die beschriebenen Ausführungsmerkmale begrenzt, sondern umfasst weiterhin Modifikationen von Merkmalen der beschriebenen Beispiele und Kombination von Merkmalen verschiedener Beispiele im Rahmen des Schutzumfangs der unabhängigen Ansprüche.

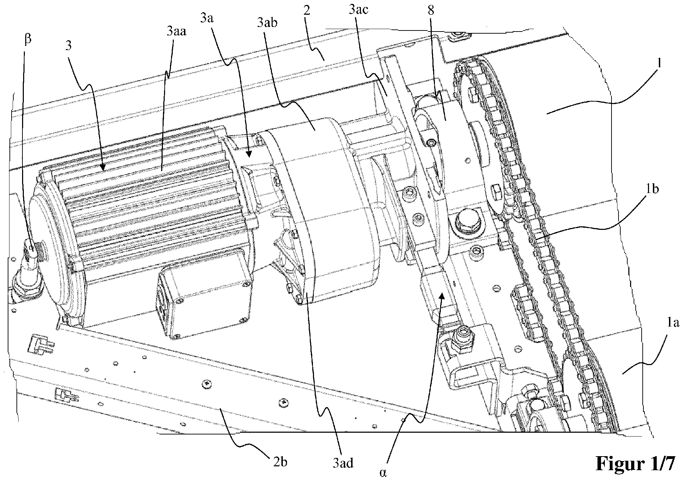

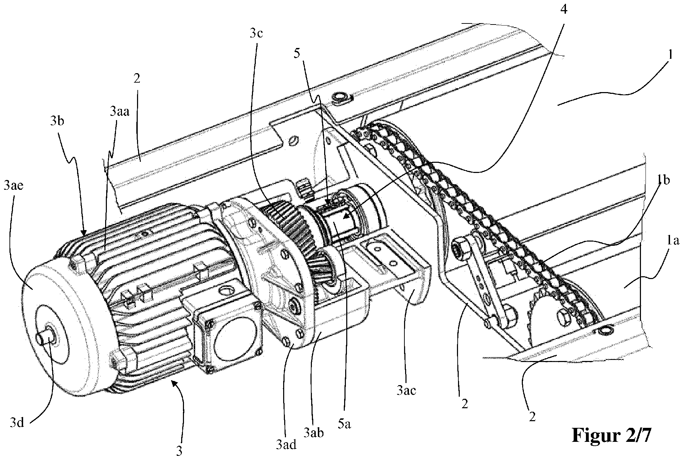

Figur 1 zeigt einen Ausschnitt eines bekannten Bremsprüfstandes. Auf der rechten Seite der Figur 2 sind die Rollen 1, 1a (abgeschnitten) gezeigt. Die Antriebsrolle 1 wird von der Antriebseinrichtung 3 angetrieben. Die Drehung der Antriebsrolle 1 wird mittels der Kette 1b auf die weitere Rolle 1a übertragen. Zwischen diesen beiden Rollen 1, 1a wird ein Kraftfahrzeugrad aufgestellt, bei dem die Bremsfunktion getestet bzw. geprüft werden soll. Dazu wird das Rad auf den Rollen von den Fahrzeugbremsen abgebremst und das dabei erzeugte Drehmoment wird mittels des gezeigten Biege-Messbalkens α - wie vorbekannt - erfasst.

Die Antriebseinrichtung weist den Motor 3b und ein Getriebe 3c auf und ist pendelnd in dem Prüfstandrahmen 2 gelagert. An der den Rollen 1, 1a entgegengesetzten Seite des Motors 3b wird die Antriebseinrichtung von einem Motorgegenlager β gelagert. Ein Versteifungselement 2b verbindet Teilabschnitte des Prüfstandrahmens 2 zu Erhöhung der mechanischen Steifigkeit des Prüfstandrahmens 2.

Die Figur 2 zeigt hinsichtlich der Antriebseinrichtung 3, der Anordnung der Rollen 1, 1a und des Prüfstandrahmens 2 einen zu Figur 1 vergleichbaren Aufbau eines Bremsprüfstandes. Der in Figur 2 gezeigte erfindungsgemäße Bremsprüfstand weist allerdings keinen Biege-Messbalken zur Erfassung eines Bremsmomentes auf und der Motor ist nicht pendelnd gelagert, sondern fest. Konkret zeigt die Figur 2 eine Ausführungsvariante, bei der die Antriebseinrichtung 3 mittels eines Flansches an einem Getriebegehäuse 3ab (im Folgenden als Getriebegehäuseflansch 3ac bezeichnet) mit einem Abschnitt des Prüfstandrahmens 2 fest verbunden ist. Dies kann beispielsweise mittels einer Schraubverbindung ausgeführt sein.

An einem den Rollen 1, 1a entgegengesetzt angeordneten Abschnitt des Motors 3b ragt aus einem Teil des Motorgehäuses 3aa bzw. aus einem Motorgehäusedeckel 3ae eine Rotorwelle 3d des Motors 3b heraus. Dieser herausstehende Abschnitt der Rotorwelle 3d weist bevorzugt eine Schlüsselfläche oder eine Nut für eine Welle-Nabe-Verbindung auf. Dessen technische Funktion wird weiter unten noch im Detail erläutert werden. Wie die Darstellung der Figur 2 auch zeigt, braucht die Rotorwelle 3d bzw. der herausstehende Abschnitt aufgrund der festen Lagerung der Antriebseinrichtung 3 nicht mehr mittels eines Gegenlagers gehalten werden. Dies spart weiteren Bauraum innerhalb des Prüfstandrahmens 2 und erhöht die Kompaktheit der erfindungsgemäßen Prüfvorrichtung.

Der Motor 3b der Antriebsvorrichtung ist in Figur 2 innerhalb eines Motorgehäuses 3aa gezeigt, das Kühlrippen zur optimalen Kühlung des Motors 3b aufweist. Der Gehäusedeckel 3ae ist mittels Schrauben mit den übrigen Gehäuseteilen verbunden. Der in Richtung der Rollen 1, 1a zeigende Abschnitt des Motorgehäuses 3aa weist einen Motorgehäuseflansch 3ad auf, der ebenfalls mittels Schraubverbindungen mit den weiteren Bauteilen des Antriebseinrichtungsgehäuses 3a verbunden ist. Der Motorgehäuseflansch 3ad hat eine im Wesentlichen rechteckige Grundfläche, die dazu geeignet ist, ein Getriebe 3c aufzunehmen. Das Getriebegehäuse 3ab ist in Figur 2 teilweise freigeschnitten, so dass das Getriebe 3c freigelegt ist. Das Getriebegehäuse 3ab und der Motorgehäuseflansch 3ad sind mittels Schraubverbindungen verbunden, so dass das Getriebe 3c sehr bauraumsparend an den Motor 3b angeordnet ist und u.a. dadurch eine sehr kompakte Bauform der Antriebseinrichtung 3 ermöglicht wird.

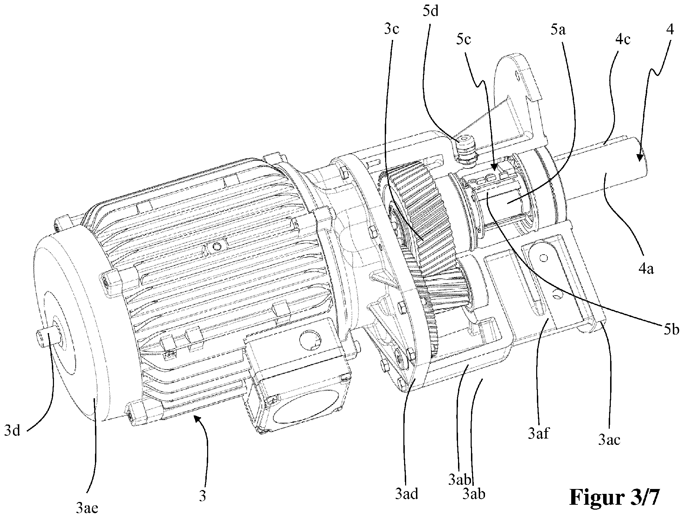

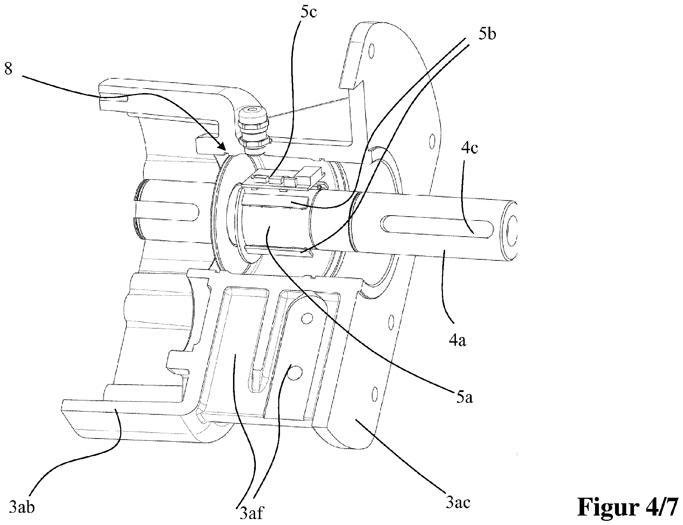

Weiterhin schließt das Getriebegehäuse 3ab auch eine Erfassungseinrichtung 5 mit ein. Die in Figur 2 gezeigte Erfassungseinrichtung 5 umschließt (zumindest teilweise) einen Messabschnitt 5a mit Sensorelementen 5b (s. Fig. 3). Der Messabschnitt 5a ist Teil einer ersten Welle 4, die bevorzugt entweder eine Abtriebswelle 4a des Getriebes 3c bzw. des Motors 3b ist oder bevorzugt eine Antriebsrollenwelle 4b der Antriebsrolle 1. Die erste Welle 4 kann aber auch eine separate Welle sein, die die Antriebsrollenwelle 4b und die Abtriebswelle 4a miteinander verbindet. In den Figuren 3 und 4 ist die erste Welle 4 als Abtriebswelle 4a dargestellt.

Die in Figur 2 gezeigte Erfassungseinrichtung 5 wird nachfolgend anhand der Figuren 3 und 4 im Detail erläutert. So zeigt die Figur 3 die Antriebseinrichtung 3 gemäß Figur 2. Das Getriebegehäuse 3ab ist an der Stelle des Getriebes 3c und der Erfassungseinrichtung 5 freigeschnitten, so dass ersichtlich ist, wie die Sensorelemente 5b, bevorzugt Magnetfeldsensoren, der Erfassungseinrichtung 5 um den Messabschnitt 5a der ersten Welle 4, in Figur 3 die Abtriebswelle 4a, herum angeordnet sind. Die gezeigte Anordnung der Sensorelemente 5b (berührungslos) um den Messabschnitt 5a herum ermöglicht, dass eine Änderung des Magnetfeldes des Messabschnittes 5a von den Sensorelementen 5b sehr feinfühlig und genau erfasst werden kann.

Oberhalb des Messabschnittes 5a ist eine Platine angeordnet, die bevorzugt eine oder mehrere Recheneinheiten 5c aufweist, die die Sensormesswerte verarbeitet und daraus die zu messenden Drehmomente bzw. Bremskräfte ermittelt. Die Sensorwerte werden bevorzugt telemetrisch an die Platine von den Sensoren übertragen. Die Platine kann durch die Kabeldurchführung 5d mit Strom versorgt werden. Ferner können Datenkabel durch die Kabeldurchführung 5d geführt sein, die die Erfassungseinrichtung 5 mit einem externen Rechner oder dgl. zum kabelgebundenen Datenaustausch verbindet. Bevorzugt können die Daten auch kabellos, beispielsweise mittels Funktechnologie, übertragen werden.

Figur 4 gibt stellt insbesondere die Abtriebswelle 4a im Detail vergrößert dar. Das Gehäuse 3ab des Getriebes 3c ist wiederum freigeschnitten. Der links gezeigte Endabschnitt der Abtriebswelle 4a weist eine Nut auf, die zur Ausbildung einer Welle-Nabe-Verbindung mit dem Getriebe 3c ermöglicht. Ebenso weist der rechts gezeigte Endabschnitt eine Nut 4c auf, mit der eine Verbindung zu der Antriebsrollenwelle 4b ausgebildet werden kann. Dazu ist die Antriebsrollenwelle 4b bevorzugt als Hohlwelle ausgeformt und die Abtriebswelle 4a kann in den Hohlabschnitt der Antriebsrollenwelle 4b eingesteckt werden. Ein mittlerer Abschnitt der Abtriebswelle 4a ist als Messabschnitt 5a ausgeprägt. Dieser Messabschnitt 5a ist derart magnetisiert, dass eine Verformung und/oder mechanische Spannungsänderung des Messabschnittes 5a zu einer Veränderung des Magnetfeldes um den Messabschnitt 5a herum führt. Diese Änderung des Magnetfeldes kann mittels der beabstandet um den Messabschnitt 5a herum angeordneten Sensorelemente 5b erfasst werden. Bevorzugt sind um den Umfang des Messabschnittes 5a mehrere Sensorelemente 5b gleichmäßig verteilt, um die Messgenauigkeit zu erhöhen. Die Sensorelemente 5b können beispielsweise Spulen oder Hall-Sensoren sein. Ebenfalls beabstandet zu dem Messabschnitt 5a und innerhalb des Getriebegehäuses 3ab ist auch die Platine mit den Recheneinheiten 5c angeordnet, so dass ein sehr kompakter Aufbau der Erfassungseinrichtung 5 erreicht wird.

Figur 4 zeigt zudem einen optionalen Versteifungsabschnitt 3af des Getriebegehäuses 3ab, der die mechanische Stabilität des Getriebegehäuses 3ab zwischen dem Flansch 3ac und dem Teil des Getriebegehäuses 3ab verbessert, der das Getriebe 3c umfasst. Dieser Abschnitt 3af kann auch kleiner gestaltet sein oder gänzlich entfallen, wenn der Bauraum der Antriebseinrichtung 3 noch weiter reduziert werden soll. Als Ausgleich können dann beispielsweise mechanisch höher belastbare Materialien für das Gehäuse verwendet werden.

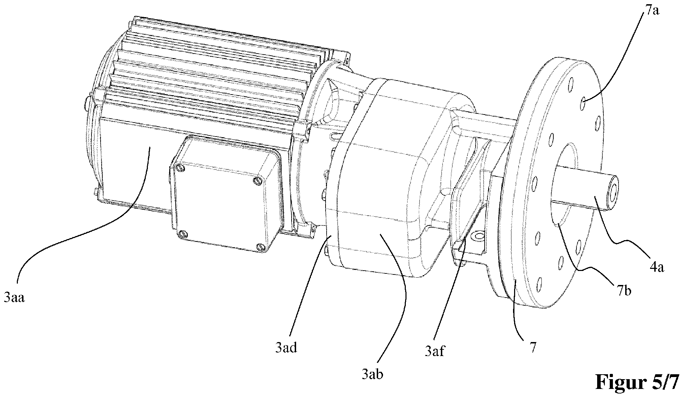

Figur 5 zeigt eine Antriebseinrichtung 3, die eine Erfassungseinrichtung 5 aufweist, die bevorzugt nicht die Veränderung des Magnetfeldes aufgrund einer Spannungsänderung der ersten Welle 4 erfasst, sondern ein mechanisches Reaktionsmoment, das aufgrund der Bremskräfte, die auf die Rollen 1, 1a wirken, in den Prüfstandrahmen 2 abgeleitet wird. Dazu ist an dem Getriebegehäuseflansch 3ac ein sogenannter Messflansch 7 angeordnet. Der Messflansch 7 weist eine Durchführung 7b für die Abtriebswelle 4a auf. Für den Fall, dass die Antriebseinrichtung 3 über kein Getriebe 3c verfügt, so könnte der Messflansch 7 beispielsweise auch an dem Motorgehäuseflansch 3ad angeordnet sein. Ferner weist der Messflansch 7 auch Bohrungen 7a auf, die zum Verbinden des Messflansches 7, z.B. mittels Schraubverbindungen, mit dem Prüfstandrahmen 2 vorgesehen sind.

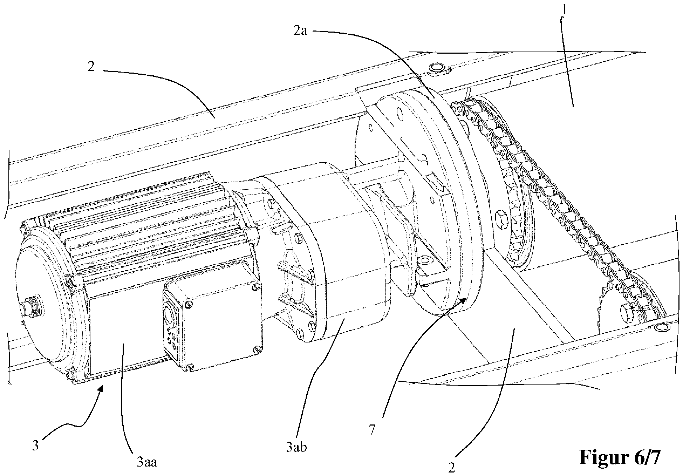

Figur 6 zeigt ferner wie der Messflansch 7 mit einem Rahmenteil 2a des Prüfstandrahmens 2 mittels Schraubverbindungen fest verbunden ist. Diese Verbindung erlaubt es, dass ein Bremsmoment, das auf die Abtriebswelle 1a wirkt, in den Prüfstandrahmen 2 geleitet wird und dieses Reaktionsmoment auf den Messflansch 7 wirkt. Der Messflansch 7 kann das Reaktionsmoment, das eine mechanische Spannungsänderung in dem Prüfstandrahmen 2 erzeugt, beispielsweise mittels Dehnmessstreifen erfassen und die Messsignale an eine Recheneinheit 5c weiterleiten, die dann das Dreh- bzw. Bremsmoment ermittelt. Die Weiterleitung der Daten kann analog oder digital, kabelgebunden oder kabellos erfolgen.

Der weitere Aufbau des erfindungsgemäßen Bremsprüfstandes der Figuren 5 und 6 stimmt im Wesentlichen mit dem bereits beschriebenen Aufbau des bekannten Prüfstandes (s. Fig. 1) und dem vorbeschriebenem Prüfstand gemäß den Figuren 2 bis 4 überein.

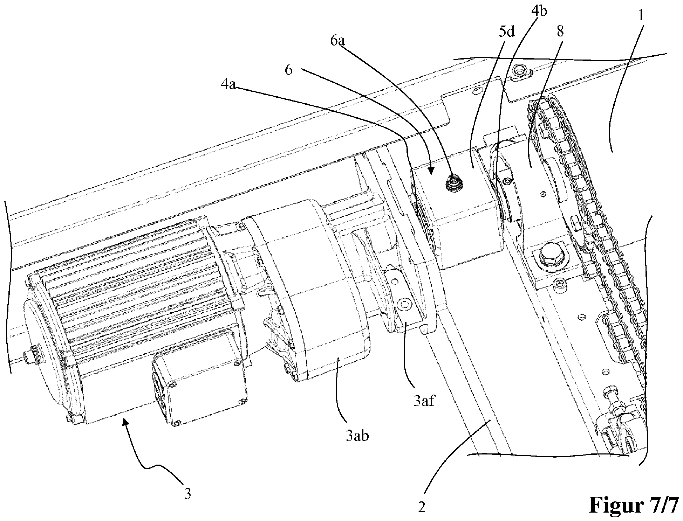

Weiterhin zeigt die Figur 7 einen erfindungsgemäßen Bremsprüfstand, der wiederrum einen im Wesentlichen gleichen Aufbau wie die vorbeschriebenen Beispiele aufweist, jedoch mit dem Unterschied, dass die Erfassungseinrichtung 5 mit einer Verbindungseinrichtung 6 kombiniert ist. Die Antriebsrollenwelle 4b ist wie gezeigt in einem Lager 8 drehbar gelagert. Die Abtriebswelle 4a ragt aus dem Gehäuse 3a der Antriebseinrichtung 3 heraus. Zwischen den Endabschnitten der beiden Wellen 4a, 4b ist eine Verbindungseinrichtung 6 angeordnet. Die Verbindungseinrichtung 6 kann einen Flansch umfassen, der die beiden Welle 4a und 4b miteinander fest verbindet. Der Flansch ist in Figur 7 nicht gezeigt ist, da dieser im Verbindungsgehäuse 6a angeordnet ist. Der nicht gezeigte Flansch kann sich mechanisch verformende oder verspannende Abschnitte aufweisen, die mit Sensorik ausgestattet sind, beispielsweise Dehnmessstreifen. Wenn über die Verbindungseinrichtung 6 bzw. deren Flansch ein Bremsmoment von der Antriebsrolle 1a in Richtung der Antriebseinrichtung 3 übertragen wird, so erfasst die am Flansch angeordnete Sensorik die daraus resultierende mechanische Spannungsänderung oder Verformung. Diese Messdaten werden telemetrisch an eine beabstandet angeordnete Recheneinheit 5c geleitet. Dort können anhand vorbekannter Zusammenhänge zwischen beispielsweise der Spannungsänderung und dem Bremsmoment die Bremsmomente und -kräfte ermittelt werden. Die Recheneinheit 5c ist bevorzugt in dem Gehäuse 6c untergebracht und in Figur 7 nicht explizit dargestellt. Die Messdaten können beispielsweise kabelgebunden über die Kabeldurchführung 5d an einen externen Rechner gesendet werden.

Neben der Verwendung von Dehnmessstreifen zur Erfassung einer mechanischen Spannungsänderung bzw. Verformung kann die Sensorik alternativ oder zusätzlich optische, piezoelektrische und/oder Sensoren für akustische Oberflächenwellen umfassen. Letztere erfassen beispielsweise die Abhängigkeit der Oberflächenwellengeschwindigkeit im Messabschnitt von der mechanischen Spannung, so dass daraus das gesuchte Moment berechnet werden kann.

Zusammengefasst bietet der erfindungsgemäße Prüfstand u.a. den technische Vorteil, dass ein kompaktere Aufbau möglich wird, der insbesondere ohne Verwendung eines Biege-Messbalkens sehr genau Bremskräfte erfassen kann, die auf die Antriebsrolle 1a während einer Bremsprüfung wirken. Die Antriebseinrichtung 3 kann ferner fest mit dem Prüfstandrahmen 2 verbunden sein, so dass die komplexe pendelnde Lagerung nicht mehr erforderlich ist.

Zudem ermöglicht der erfindungsgemäße Aufbau des Prüfstandes auch eine weniger aufwendige und genaue Justierung bzw. Kalibrierung des Prüfstandes. Eine Kalibrierung ist beispielsweise beim erstmaligen Aufbau eines solchen Prüfstandes vorgeschrieben. Dazu wird beispielsweise der aus dem Motorgehäuse 3aa herausstehende Abschnitt der Rotorwelle 3d festgehalten. Dies kann bevorzugt wenig aufwendig dadurch erfolgen, dass die oben beschriebene Schlüsselfläche oder die Nut der Rotorwelle 3 zur Ausbildung einer Welle-Nabe-Verbindung verwendet wird. Während der Teil der Rotorwelle 3d festgehalten wird, d.h. gegen Verdrehung gesichert wird, wird auf die Abtriebswelle 4a bei bereits montierter Erfassungseinrichtung 5 ein vordefiniertes Drehmoment gegeben. Das vordefinierte Drehmoment wird von der Erfassungseinrichtung 5 erfasst und ein Messwert ausgegeben. Mittels eines Abgleiches zwischen dem Messwert und dem Wert des vordefinierten Drehmomentes kann dann die Kalibrierung bzw. Justierung schnell und genau erfolgen.

Das oben beschriebene Kalibrierungsverfahren kann auch umgekehrt durchgeführt werden, wobei sich umgekehrt auf die festgehaltene Welle und mit einem Drehmoment beaufschlagte Welle bezieht. So kann der herausstehende Abschnitt der Rotorwelle 3d mit dem vordefinierten Drehmoment beaufschlagt werden, währen die Abtriebswelle festgehalten wird.

Der oben beschriebene Kalibrierungsvorgang erlaubt, dass der Aufbau und die Wartung des erfindungsgemäßen Prüfstandes besonders zügig und ohne großen Aufwand durchgeführt werden kann.

## Patentansprüche

1. Kraftfahrzeugbremsprüfstand mit
- zumindest einer Antriebsrolle (1), die drehbar in einem Prüfstandrahmen (2) gelagert ist und die dazu geeignet ist, ein Rad eines Kraftfahrzeuges anzutreiben,
- zumindest einer Antriebseinrichtung (3), die dazu geeignet ist, die Antriebsrolle (1) anzutreiben und die ortsfest an dem Prüfstandrahmen (2) angeordnet ist, und
- zumindest einer ersten Welle (4), die mit der Antriebsrolle (1) drehfest verbunden ist und über die ein Drehmoment zwischen der Antriebsrolle (1) und der Antriebseinrichtung (3) übertragbar ist,
**gekennzeichnet dadurch, dass** die erste Welle (4) zumindest einen Endabschnitt oder einen Mittelabschnitt aufweist, der mittels eines Beaufschlagens von Stromimpulsen über Stromzu- und ableitungen magnetisch kodiert wurde, und der Kraftfahrzeugbremsprüfstand ferner eine Erfassungseinrichtung (5) aufweist, die dazu geeignet ist, das übertragene Drehmoment basierend auf einer magnetischen Änderung bei einer Änderung der mechanischen Spannung bzw. Verformung des End- oder Mittelabschnittes zu erfassen.

2. Der Kraftfahrzeugbremsprüfstand gemäß zumindest einem der vorangegangenen Patentansprüche, **gekennzeichnet dadurch, dass** die Erfassungseinrichtung (5) dazu geeignet ist, eine mechanische Spannungsänderung der ersten Welle (4) und/oder des Prüfstandrahmens (2) zu erfassen, so dass basierend auf der mechanische Spannungsänderung das übertragene Drehmoment bestimmbar ist.

3. Der Kraftfahrzeugbremsprüfstand gemäß zumindest einem der vorangegangenen Patentansprüche, **gekennzeichnet dadurch, dass** die erste Welle (4) einen Längsabschnitt aufweist, der ein magnetisch kodierter Messabschnitt (5a) ist, der derart kodiert ist, dass ein vorbestimmter physikalischer Zusammenhang zwischen magnetischen Eigenschaften des Messabschnittes (5a) und einer mechanischen Spannungsänderung des Messabschnittes (5a) gegeben ist, wobei
die Erfassungseinrichtung (5) zumindest ein Sensormittel (5b) aufweist, das dazu geeignet ist, Änderungen der magnetischen Eigenschaften des Messabschnittes (5a) zu erfassen.

4. Der Kraftfahrzeugbremsprüfstand gemäß Patentanspruch 3, **gekennzeichnet dadurch, dass** das Sensormittel (5b) ein Magnetfeld-Sensor ist, der berührungslos zu dem Messabschnitt (5a) angeordnet ist.

5. Der Kraftfahrzeugbremsprüfstand gemäß zumindest einem der vorangegangenen Patentansprüche, **gekennzeichnet dadurch, dass** eine Abtriebswelle (4a) der Antriebseinrichtung (3) und eine Antriebsrollenwelle (4b) der Antriebsrolle (1) mittels eines Verbindungselementes (6) drehfest miteinander verbunden sind, wobei die Erfassungseinrichtung (5) an dem Verbindungselement (6) angeordnet ist, und
die Erfassungseinrichtung (5) ein Erfassungselement aufweist, das einen optischen Sensor, einen piezoelektrischen Sensor und/oder einen Sensoren für akustische Oberflächenwellen umfasst.

6. Der Kraftfahrzeugbremsprüfstand gemäß zumindest einem der vorangegangenen Patentansprüche, **gekennzeichnet dadurch, dass** die Erfassungseinrichtung (5) einen Messflansch (7) umfasst, der fest mit dem Prüfstandrahmen (2) und einem Gehäuse (3a) der Antriebseinrichtung (3) verbunden ist.

7. Der Kraftfahrzeugbremsprüfstand gemäß zumindest einem der vorangegangenen Patentansprüche, **gekennzeichnet dadurch, dass** die Erfassungseinrichtung (5) eine Recheneinheit (5c) aufweist oder mit einer Recheneinheit verbunden ist, die basierend auf der erfassten mechanischen Spanungsänderung das übertragene Drehmoment berechnet.

8. Der Kraftfahrzeugbremsprüfstand gemäß zumindest einem der vorangegangenen Patentansprüche, **gekennzeichnet dadurch, dass** die Antriebseinrichtung (3) zumindest einen Motor (3b) und zumindest ein Getriebe (3c) aufweist, wobei
die Erfassungseinrichtung (5) zumindest teilweise innerhalb eines Gehäuses (3a) der Antriebseinrichtung (3) angeordnet ist.

9. Der Kraftfahrzeugbremsprüfstand gemäß zumindest einem der vorangegangenen Patentansprüche, **gekennzeichnet dadurch, dass** zumindest ein Abschnitt einer Rotorwelle (3d) des Motors aus einem Gehäuse (3a) der Antriebseinrichtung (3) herausragt, wobei der Abschnitt der Rotorwelle (3d), der aus dem Gehäuse (3a) ragt, eine Schlüsselfläche und/oder eine Nut für eine Feder-Nut-Verbindung aufweist.

10. Der Kraftfahrzeugbremsprüfstand gemäß zumindest einem der vorangegangenen Patentansprüche, **gekennzeichnet dadurch, dass** die erste Welle (4) eine Schlüsselfläche und/oder eine Nut (4c) für eine Feder-Nut-Verbindung aufweist.

11. Verfahren zum Kalibrieren eines Kraftfahrzeugbremsprüfstand mit
zumindest einer Antriebsrolle (1), die drehbar in einem Prüfstandrahmen (2) gelagert ist und die dazu geeignet ist, ein Rad eines Kraftfahrzeuges anzutreiben,
zumindest einer Antriebseinrichtung (3), die dazu geeignet ist, die Antriebsrolle (1) anzutreiben und die ortsfest an dem Prüfstandrahmen (2) angeordnet ist,
zumindest einer ersten Welle (4), die mit der Antriebsrolle (1) drehfest verbunden ist und über die ein Drehmoment zwischen der Antriebsrolle (1) und der Antriebseinrichtung (3) übertragbar ist, wobei zumindest ein Endabschnitt oder ein Mittelabschnitt der ersten Welle (4) mittels eines Beaufschlagens von Stromimpulsen über Stromzu- und ableitungen magnetisch kodiert wurde, und einer Erfassungseinrichtung (5), die dazu geeignet ist, das übertragene Drehmoment basierend auf einer magnetischen Änderung bei einer Änderung der mechanischen Spannung bzw. Verformung des End- oder Mittelabschnittes zu erfassen, wobei
die Antriebseinrichtung (3) zumindest einen Motor (3b) aufweist und die Erfassungseinrichtung (5) zumindest teilweise innerhalb eines Gehäuses (3a) der Antriebseinrichtung (3) angeordnet ist, und wobei
zumindest ein Abschnitt einer Rotorwelle (3d) des Motors (3b) aus dem Gehäuse (3a) der Antriebseinrichtung (3) herausragt, wobei der Abschnitt der Rotorwelle (3d), der aus dem Gehäuse (3a) ragt, eine Schlüsselfläche und/oder eine Nut für eine Feder-Nut-Verbindung aufweist;
wobei das Verfahren die Schritte umfasst, dass
- ein vordefiniertes Drehmoment an die erste Welle (4) angelegt wird während der herausstehende Abschnitt der Rotorwelle (3d) gegen ein Verdrehen gesichert ist, oder wobei
- ein vordefiniertes Drehmoment an den herausstehenden Abschnitt der Rotorwelle (3d) angelegt wird während die erste Welle (4) gegen ein Verdrehen gesichert ist,
- und das angelegte vordefinierte Drehmoment mittels der Erfassungseinrichtung (5) erfasst wird.

## Claims

1. A brake test stand for motor vehicles, comprising
- at least one drive roller (1) mounted rotatably in a test stand frame (2) and adapted to drive a wheel of a motor vehicle,
- at least one drive means (3) adapted to drive said drive roller (1) and arranged in a fixed position on said test stand frame (2), and
- at least one first shaft (4) connected to said drive roller (1) for rotation therewith, by means of which the torque is transmittable between said drive roller (1) and said drive means (3), and
**characterized in that** said first shaft (4) includes at least one end portion or central portion which has been magnetically encoded by applying current pulses via current supply and discharge lines, and said brake test stand for motor vehicles further comprises a detection device (5) which is adapted to detect the transmitted torque based on a magnetic change in response to a change in the mechanical stress on said end and central portions or a deformation thereof.

2. The brake test stand for motor vehicles according to at least one of the preceding claims, **characterized in that** said detecting means (5) is adapted to detect a change in the mechanical stress on said first shaft (4) and/or on said brake test stand (2) such that the transmitted torque can be determined based on the change in mechanical stress.

3. The brake test stand for motor vehicles according to at least one of the preceding claims, **characterized in that** said first shaft (4) has a longitudinal portion which is a magnetically encoded measuring portion (5a) that is encoded in such a manner that a predetermined physical relationship between the magnetic properties of said measuring portion (5a) and a change in the mechanical stress on said measuring portion (5a) exists, wherein
said detecting means (5) includes at least one sensor means (5b) which is adapted to detect changes in the magnetic properties of said measuring portion (5a).

4. The brake test stand for motor vehicles according to claim 3, **characterized in that** said sensor means (5b) is a magnetic field sensor arranged without contact to said measuring portion (5a).

5. The brake test stand for motor vehicles according to at least one of the preceding claims, **characterized in that** an output shaft (4a) of said drive means (3) and a drive roller shaft (4b) of said drive roller (1) are connected to one another by means of a connecting element (6) for rotation with each other, wherein said detecting means (5) is arranged on said connecting element (6), and
said detecting means (5) comprises a detecting element which comprises an optical sensor, a piezoelectric sensor and/or a sensor for surface acoustic waves.

6. The brake test stand for motor vehicles according to at least one of the preceding claims, **characterized in that** said detecting means (5) comprises a measuring flange (7) integrally connected to said test stand frame (2) and a housing (3a) of said drive means (3).

7. The brake test stand for motor vehicles according to at least one of the preceding claims, **characterized in that** said detecting means (5) comprises a computing unit (5c) or is connected to a computing unit which calculates the transmitted torque based on the detected change in mechanical stress.

8. The brake test stand for motor vehicles according to at least one of the preceding claims, **characterized in that** said drive means (3) comprises at least one motor (3b) and at least one gear (3c), wherein
said detecting means (5) is at least partially arranged within a housing (3a) of said drive means (3).

9. The brake test stand for motor vehicles according to at least one of the preceding claims, **characterized in that** at least one portion of a rotor shaft (3d) of said motor protrudes from a housing (3a) of said drive means (3), wherein
said portion of said rotor shaft (3d) protruding from said housing (3a) includes a key face and/or a groove for a tongue and groove connection.

10. The brake test stand for motor vehicles according to at least one of the preceding claims, **characterized in that** said first shaft (4) has a key face and/or a groove (4c) for a tongue and groove connection.

11. A method for calibrating a brake test stand for motor vehicles, comprising
- at least one drive roller (1) mounted rotatably in a test stand frame (2) and adapted to drive a wheel of a motor vehicle,
- at least one drive means (3) adapted to drive said drive roller (1) and arranged in a fixed position on said test stand frame (2), and
- at least one first shaft (4) connected to said drive roller (1) for rotation therewith, by means of which the torque is transmittable between said drive roller (1) and said drive means (3), and
wherein at least one end portion or central portion of said first shaft (4) has been magnetically encoded by applying current pulses via current supply and discharge lines, and
- a detection device (5) which is adapted to detect the transmitted torque based on a magnetic change in response to a change in the mechanical stress on said end and central portions or a deformation thereof,
wherein said drive means (3) comprises at least one motor (3b) and said detecting means (5) is at least partially arranged within a housing (3a) of said drive means (3), and wherein
at least one portion of a rotor shaft (3d) of said motor protrudes from a housing (3a) of said drive means (3), wherein the portion of said rotor shaft (3d) protruding from said housing (3a) includes a key face and/or a groove for a tongue and groove connection;
wherein said method comprises the steps of
- applying a predefined torque to said first shaft (4) while the protruding portion of said rotor shaft (3d) is secured against relative rotation, or
- applying a predefined torque to the protruding portion of said rotor shaft (3d) while said first shaft (4) is secured against relative rotation, and
- detecting the applied predefined torque by means of said detecting means (5).

## Revendications

1. Banc d'essai de freinage pour véhicules automobiles, comportant
- au moins un rouleau d'entraînement (1) qui est monté mobile en rotation dans un cadre de banc d'essai (2) et qui est apte à entraîner une roue d'un véhicule automobile,
- au moins un dispositif d'entraînement (3) qui est apte à entraîner le rouleau d'entraînement (1) et qui est agencé de façon stationnaire sur le cadre de banc d'essai (2), et
- au moins un premier arbre (4) qui est relié solidairement en rotation au rouleau d'entraînement (1) et qui permet de transmettre un couple de rotation entre le rouleau d'entraînement (1) et le dispositif d'entraînement (3),
**caractérisé en ce que**
le premier arbre (4) comprend au moins une portion d'extrémité ou une portion centrale qui a été magnétiquement encodée par application d'impulsions de courant par des lignes d'alimentation et de dérivation de courant, et
le banc d'essai de freinage pour véhicules automobiles comprend en outre un dispositif de détection (5) qui est apte à détecter le couple de rotation transmis en se basant sur une modification magnétique lors d'une modification de la contrainte mécanique ou de la déformation mécanique de la portion d'extrémité ou centrale.

2. Banc d'essai de freinage pour véhicules automobiles selon l'une au moins des revendications précédentes,
**caractérisé en ce que**
le dispositif de détection (5) est apte à détecter une modification de la contrainte mécanique du premier arbre (4) et/ou du cadre (2) du banc d'essai, de sorte que le couple de rotation transmis peut être déterminé en se basant sur la modification de la contrainte mécanique.

3. Banc d'essai de freinage pour véhicules automobiles selon l'une au moins des revendications précédentes,
**caractérisé en ce que**
le premier arbre (4) comprend une portion longitudinale qui est une portion de mesure (5a) encodée magnétiquement, qui est encodée de telle sorte qu'il existe une relation physique prédéterminée entre les propriétés magnétiques de la portion de mesure (5a) et une modification de la contrainte mécanique de la portion de mesure (5a),
dans lequel
le dispositif de détection (5) comprend au moins un moyen capteur (5b) qui est apte à détecter des modifications des propriétés magnétiques de la portion de mesure (5a).

4. Banc d'essai de freinage pour véhicules automobiles selon la revendication 3,
**caractérisé en ce que**
le moyen capteur (5b) est un capteur de champ magnétique qui est agencé sans contact physique avec la portion de mesure (5a).

5. Banc d'essai de freinage pour véhicules automobiles selon l'une au moins des revendications précédentes,
**caractérisé en ce que**
un arbre mené (4a) du dispositif d'entraînement (3) et un arbre (4b) du rouleau d'entraînement (1) sont reliés solidairement en rotation l'un à l'autre par l'intermédiaire d'un élément de liaison (6),
dans lequel
le dispositif de détection (5) est agencé sur l'élément de liaison (6), et
le dispositif de détection (5) comprend un élément de détection qui comprend un capteur optique, un capteur piézoélectrique et/ou un capteur pour ondes acoustiques de surface.

6. Banc d'essai de freinage pour véhicules automobiles selon l'une au moins des revendications précédentes,
**caractérisé en ce que**
le dispositif de détection (5) comprend une bride de mesure (7) qui est reliée solidairement au cadre (2) du banc d'essai et à un carter (3a) du dispositif d'entraînement (3).

7. Banc d'essai de freinage pour véhicules automobiles selon l'une au moins des revendications précédentes,
**caractérisé en ce que**
le dispositif de détection (5) comprend une unité de calcul (5c) ou est connecté à une unité de calcul qui calcule le couple de rotation transmis en se basant sur la modification détectée de la contrainte mécanique.

8. Banc d'essai de freinage pour véhicules automobiles selon l'une au moins des revendications précédentes,
**caractérisé en ce que**
le dispositif d'entraînement (3) comprend au moins un moteur (3b) et au moins un mécanisme de transmission (3c), et
le dispositif de détection (5) est agencé au moins partiellement à l'intérieur d'un carter (3a) du dispositif d'entraînement (3).

9. Banc d'essai de freinage pour véhicules automobiles selon l'une au moins des revendications précédentes,
**caractérisé en ce que**
au moins une portion d'un arbre rotor (3d) du moteur dépasse hors du carter (3a) du dispositif d'entraînement (3), et
la portion de l'arbre rotor (3d) dépassant hors du carter (3a) présente une surface à clé et/ou une rainure pour une liaison à languette-et-rainure.

10. Banc d'essai de freinage pour véhicules automobiles selon l'une au moins des revendications précédentes,
**caractérisé en ce que**
le premier arbre (4) présente une à surface clé et/ou une rainure (4c) pour une liaison à languette-et-rainure.

11. Procédé pour calibrer un banc d'essai de freinage pour véhicules automobiles, comportant
au moins un rouleau d'entraînement (1) qui est monté mobile en rotation dans un cadre de banc d'essai (2) et qui est apte à entraîner une roue d'un véhicule automobile,
au moins un dispositif d'entraînement (3) qui est apte à entraîner le rouleau d'entraînement (1) et qui est agencé de façon stationnaire sur le cadre du banc d'essai (2),
au moins un premier arbre (4) qui est relié solidairement en rotation au rouleau d'entraînement (1) et qui permet de transmettre un couple de rotation entre le rouleau d'entraînement (1) et le dispositif d'entraînement (3),
dans lequel
au moins une portion d'extrémité ou une portion centrale du premier arbre (4) a été magnétiquement encodée par application d'impulsions de courant par des lignes d'alimentation et de dérivation de courant, et
un dispositif de détection (5) qui est apte à détecter le couple de rotation transmis en se basant sur une modification magnétique lors d'une modification de la contrainte mécanique ou de la déformation mécanique de la portion d'extrémité ou centrale,
dans lequel
le dispositif d'entraînement (3) comprend au moins un moteur (3b) et le dispositif de détection (5) est agencé au moins partiellement à l'intérieur d'un carter (3a) du dispositif d'entraînement (3), et
au moins une portion d'un arbre rotor (3d) du moteur (3b) dépasse hors du carter (3a) du dispositif d'entraînement (3),
la portion de l'arbre rotor (3d) dépassant hors du carter (3a) présente une surface à clé et/ou une rainure pour une liaison à languette-et-rainure ;
le procédé comprenant les étapes consistant à
- appliquer un couple de rotation prédéfini au premier arbre (4) alors que la portion dépassante de l'arbre rotor (3d) est bloquée à l'encontre d'une rotation, ou
- appliquer un couple de rotation prédéfini à la portion dépassante de l'arbre rotor (3d) alors que le premier arbre (4) est bloqué à l'encontre d'une rotation, et
- détecter le couple de rotation prédéfini appliqué au moyen du dispositif de détection (5).
